# EUROPÄISCHE PATENTSCHRIFT

(11) **EP 3 397 889 B1**
(45) Veröffentlichungstag und Bekanntmachung des Hinweises auf die Patenterteilung: **10.01.2024**
(21) Anmeldenummer: 16804801.5
(22) Anmeldetag: 01.12.2016
(51) Int. Cl.: F16L 41/08, F16L 41/10, F16L 41/14

(54) **ANSCHLUSSVORRICHTUNG**
CONNECTION DEVICE
DISPOSITIF DE RACCORDEMENT

(30) Priorität: 28.12.2015 AT 511042015
(43) Veröffentlichungstag der Anmeldung: 07.11.2018
(73) Patentinhaber: Hawle Water Technology Norge AS, 1340 Skui (NO)
(72) Erfinder: VOGL, Sebastian, 4850 Timelkam (AT)
(74) Vertreter: Puchberger & Partner Patentanwälte
(86) Internationale Anmeldenummer: PCT/EP2016/079369
(87) Internationale Veröffentlichungsnummer: WO 2017/114627

(56) Entgegenhaltungen:
- EP-A1- 0 890 777
- DE-A1- 3 303 434
- DE-A1- 3 637 975
- DE-U1- 7 619 362
- DE-U1-202012 103 503
- US-A- 2 132 636
- US-A1- 2008 030 021

## Beschreibung

Die Erfindung betrifft eine Anschlussvorrichtung zur Verbindung eines Hauptrohres mit einem Nebenrohr.

Aus dem Stand der Technik sind verschiedene Anschlussvorrichtungen bekannt, um ein Nebenrohr an eine Wandausnehmung, meistens eine Bohrung, eines bestehenden Hauptrohres anzuschließen, wobei dies in der Regel durch direktes Verschweißen des Nebenrohres mit dem Hauptrohr oder durch Einfügen, insbesondere Einschrauben, eines zylinderförmigen, mit einem Außengewinde versehenen Anschlussstutzens in die Wandausnehmung realisiert wird. In speziellen Anwendungen ist es jedoch erforderlich, das Nebenrohr anzubringen, ohne das Hauptrohr von außen zugänglich zu machen. In diesen Anwendungen muss die Montage der Anschlussvorrichtung im Inneren des Hauptrohres erfolgen, was in der Montage erhebliche Schwierigkeiten verursacht.

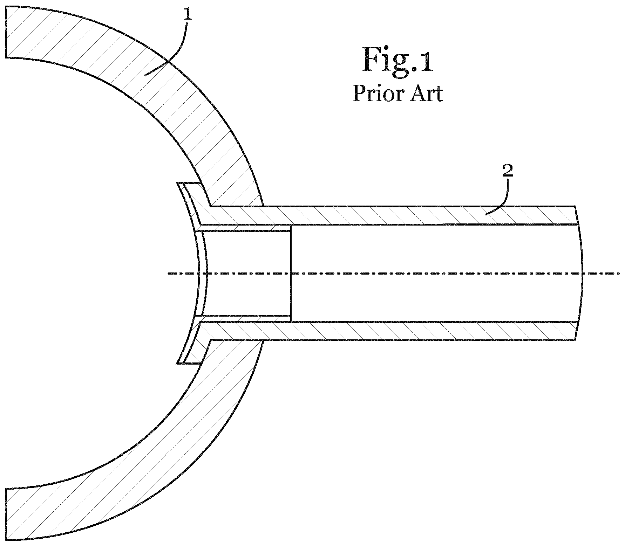

Zu diesem Zweck ist beispielsweise die in Fig. 1 gezeigte Lösung bekannt, wobei das Nebenrohr zunächst durch die Wandausnehmung des Hauptrohres gesteckt wird und danach durch das Innere des Nebenrohres eine Hülse eingeführt und flächig aufgewalzt wird. Dadurch wird jedoch nur eine unzureichende Abdichtung des Nebenrohres zum Hauptrohr erreicht.

Eine andere Lösung wird beispielsweise in europäischen Patentanmeldung EP 0890777 A1 offenbart, wo ein zylinderförmiges Kopplungselement mit einer einzelnen Dichtfläche gezeigt wird. Ähnliche Ausführungsformen sind in der US-amerikanischen Patentanmeldung US 2132636 A, sowie in der deutschen Gebrauchsmusterschrift DE 202012103503 U1 gezeigt. Eine Rohrverbindung mit einem Pressring angedrückten Dichtungsring wird in der deutschen Patentanmeldung DE 3637975 A1 offenbart. Eine Rohrkupplung für die Verbindung zweier Rohre in Längsrichtung ist beispielsweise in der deutschen Gebrauchsmusterschrift DE 7619362 U1 gezeigt. Weitere Rohrverbindungen sind in DE 330343 A1 sowie US 2008/0030021 A1 offenbart.

Eine Aufgabe der Erfindung besteht somit darin, eine gattungsgemäße Anschlussvorrichtung zu schaffen, welche eine einfache Montage des Hauptrohres ermöglicht, wobei dennoch eine ausreichend gute Abdichtung der Anschlussstelle ermöglicht werden soll.

Diese und andere Aufgaben werden erfindungsgemäß dadurch gelöst, dass zur Abdichtung des Anschlussstutzens ein am Hauptrohr anliegendes, vorzugsweise ringförmiges Dichtelement vorgesehen ist, welches direkt oder über mechanische Verbindungselemente mit einem äußeren Umfang des Anschlussstutzens in Verbindung steht, sowie das Dichtelement an seinem inneren Umfang einen Vorsprung umfasst, welcher mit einer Schulter an einem äußeren Umfang des Anschlussstutzens formschlüssig zusammenwirkt. Bei der Montage wird das Dichtelement durch den Anschlussstutzen gegen das Hauptrohr gepresst und dichtet die Wandausnehmung gegenüber dem durchfließenden Medium ab.

Das Dichtelement kann Metall oder Kunststoff umfassen.

Erfindungsgemäß kann vorgesehen sein, dass das Dichtelement an der Innenwand des Hauptrohres im Bereich der Wandausnehmung anliegt. Dazu kann das Dichtelement an einer Seite eine an den Durchmesser des Hauptrohres angepasste Oberflächenkontur aufweisen, um ein gutes Anliegen an die Innenwand zu ermöglichen. Erfindungsgemäß kann das Dichtelement auch an der Stirnfläche der Wandausnehmung des Hauptrohres anliegen, wobei das Dichtelement im Wesentlichen ringförmig an den Durchmesser der Wandausnehmung angepasst ist. Es sind auch Kombinationen erfindungsgemäß vorgesehen, wobei das Dichtelement sowohl an der Innenwand des Hauptrohres, als auch an der Stirnfläche der Wandausnehmung anliegt.

Erfindungsgemäß kann weiters vorgesehen sein, dass das Dichtelement ringförmig ausgeführt ist und der Außendurchmesser des Dichtelements größer ist als der Durchmesser der Wandausnehmung des Hauptrohres ist. Dadurch umgibt das Dichtelement die Wandausnehmung und wird durch weitere konstruktive Maßnahmen wie im Folgenden beschrieben gegen die Innenwand oder die Wandausnehmung gepresst.

Das Dichtelement weist eine erste, vorzugsweise an die Innenfläche des Hauptrohres angeformte Dichtfläche und eine zweite, vorzugsweise ringförmige Dichtfläche auf, wobei im montierten Zustand die erste Dichtfläche an der Innenwand des Hauptrohres und die zweite Dichtfläche an einem äußeren Umfang des Anschlussstutzens anliegt. Dadurch ergibt sich der erfindungsgemäße Effekt, dass der Anschlussstutzen das Dichtelement gegen das Hauptrohr presst, sodass beim Montieren des Anschlussstutzens die erwünschte Dichtwirkung erzielt wird.

Die erste Dichtfläche und die zweite Dichtfläche können vorzugsweise winkelig, beispielsweise in einem Winkel von 60° bis 90°, zueinander angeordnet sein, abhängig vom Durchmesser des Hauptrohres und dem Ausmaß der Wandausnehmung. In einer Nut der ersten Dichtfläche kann ein erster Dichtungsring und in einer Nut der zweiten Dichtfläche ein zweiter Dichtungsring angeordnet sein, was insbesondere dann vorteilhaft ist, wenn der Dichtungsring aus einem Metall gefertigt ist oder die Dichtflächen Metall umfassen.

Das Dichtelement umfasst an seinem inneren Umfang erfindungsgemäß einen Vorsprung, welcher mit einer korrespondierenden Schulter an einem äußeren Umfang des Anschlussstutzens derart formschlüssig zusammenwirkt, dass das Dichtelement beim Einsetzen oder Verschrauben des Anschlussstutzens in die Wandausnehmung gegen die Innenwand des Hauptrohres gepresst wird. Bei der Montage wird der Anschlussstutzen mit aufgestecktem Dichtelement in die mit einem Gewinde versehene Wandausnehmung geschraubt und sowohl die Justierung, als auch die gewünschte Abdichtung erfolgt beim Festschrauben des Anschlussstutzens automatisch.

Erfindungsgemäß kann der erfindungsgemäße im Wesentlichen zylinderförmige Anschlussstutzen insbesondere derart ausgeführt sein, dass er in lateraler Richtung einen ersten Bereich mit einer radial vorstehenden Schulter zur formschlüssigen Verbindung mit dem Dichtelement, einen zweiten Bereich mit einem Außengewinde zum Einschrauben in die Wandausnehmung des Hauptrohres, sowie einen dritten Bereich zur Verbindung mit einem Nebenrohr aufweist.

Zur Verbindung des erfindungsgemäßen Anschlussstutzens mit einem Nebenrohr kann ein im Wesentlichen zylindrisches Fittinggehäuse vorgesehen sein, welches ebenfalls als Teil der erfindungsgemäßen Anschlussvorrichtung beansprucht wird.

Dieses Fittinggehäuse kann erfindungsgemäß eine erste Öffnung zur Aufnahme des Anschlussstutzens mit zumindest einem Steckverbindungsmittel, beispielsweise einem, in einer Nut des Anschlussstutzens angeordneten Sprengring, sowie zumindest einem Dichtungsmittel, beispielsweise einem Dichtungsring, aufweisen. Bei der Montage kann das Fittinggehäuse in einfacher Weise auf den Anschlussstutzen aufgesteckt und eingerastet werden.

Das Fittinggehäuse kann weiters eine zweite Öffnung zur Aufnahme eines Nebenrohres aufweisen, wobei im Bereich der zweiten Öffnung eine umlaufende erweiterte Dichtkammer vorgesehen ist, welche eine Auszugsicherung in Form einer lateral verschiebbaren, mit einer konischen Innenfläche der Dichtkammer zusammenwirkenden Klemme mit konischer Außenfläche sowie zumindest einen Dichtungsring aufweist. Dadurch wird eine besonders einfache Montage des Nebenrohres ermöglicht, welches einfach in die zweite Öffnung des Fittinggehäuses gesteckt wird und dort durch Zugbewegung fixiert wird.

Erfindungsgemäß kann vorgesehen sein, dass am inneren Umfang des Fittinggehäuses eine erste Schulter als Anschlag für das Einführen des Anschlussstutzens sowie eine zweite Schulter als Anschlag für das Einführen des Nebenrohres vorgesehen ist. Dadurch wird erreicht, dass beim Einführen des Anschlussstutzens und des Nebenrohres ein definierter Endpunkt detektierbar ist. Im Bereich der ersten Schulter und/oder der zweiten Schulter kann weiters eine Montageanzeige vorgesehen sein, sofern bei der Montage eine visuelle Kontrolle möglich ist.

Erfindungsgemäß sind verschiedenste Ausführungsformen der Anschlussvorrichtung vorgesehen. So kann vorgesehen sein, dass das Dichtelement als ringförmige Tonnenlagerdichtung mit einer konvexen äußeren Umfangsfläche ausgeführt ist, welche an ihrem äußeren Umfang an der Stirnfläche der Wandausnehmung des Hauptrohres anliegt und an ihrem inneren Umfang über einen Verbindungsring mit dem äußeren Umfang des Anschlussstutzens in Verbindung steht. Die Verwendung einer Tonnenlagerdichtung bietet durch die gewölbte Geometrie den erfindungsgemäßen Vorteil, dass die Anschlussvorrichtung in einem gewissen Bereich schwenkbar ist.

Ebenfalls kann erfindungsgemäß vorgesehen sein, dass das Dichtelement an der Außenfläche des Hauptrohres angeordnet und mit dem Anschlussstutzen verschraubt sowie durch einen, in die Wandausnehmung des Hauptrohres eingeführten Steckhaken fixiert ist.

In einer weiteren Ausführungsform der Erfindung ist das Dichtelement als ringförmiges Schweißelement ausgeführt, das mit dem Anschlussstutzen von innen verschweißt ist. Der Anschlussstutzen kann in diesem Fall als ringförmiges Schweißfitting mit einer umlaufenden Ringschulter ausgeführt sein, welche gegen das ebenfalls ringförmige Schweißelement drückt und somit die Wandausnehmung abdichtet. Schweißelement, Schweißfitting und Hauptrohr werden bei der Montage miteinander verschweißt. Zur Erhöhung der Stabilität des Nebenrohres kann eine Stützbuchse im Inneren des Schweißfittings vorgesehen sein.

In einer weiteren Ausführungsform der Erfindung ist das Dichtelement durch eine Schraubklemme aus dem Inneren des Hauptrohres zusammenpressbar. Die Schraubklemme ist auf einen, in die Wandausnehmung eingesetzten Anschlag schraubbar und mit dem Anschlussstutzen über einen Verbindungsring in Verbindung. Das Dichtelement wird durch eine Schulter der Schraubklemme zwischen der Innenwand des Hauptrohres und dem Anschlag eingepresst.

In einer weiteren Ausführungsform der Erfindung ist das Dichtelement als ein, den inneren Umfang des Rohres zumindest teilweise bedeckender Dichtmantel ausgeführt. Der Dichtmantel erstreckt sich in dieser Ausführungsform in einem gewissen Längenabschnitt über den gesamten inneren Umfang des Hauptrohres und wird nur durch den eingeführten Anschlussstutzen unterbrochen. Die Verbindung zum Rohrübergang erfolgt in diesem Fall über ein Einlegeteil, welches zwischen dem Dichtelement und dem Anschlussstutzen eingelegt ist.

In einer weiteren Ausführungsform der Erfindung ist das Dichtelement an der Stirnseite der Wandausnehmung angeordnet, ragt abgewinkelt in das Innere des Hauptrohres und umfasst eine Schubsicherung, vorzugsweise in Form eines eingelegten Blechteils.

In dieser Ausführungsform trägt der Anschlussstutzen eine aufgeschraubte Spannmutter und eine Keilklemmscheibe, welche mit dem ins Innere des Hauptrohres ragenden, abgewinkelten Dichtelement in Kontakt steht. Beim Betätigen der Spannmutter wird die Keilklemmscheibe gegen das Dichtelement geschoben und presst dieses an den inneren Umfang des Hauptrohres, sodass die gewünschte Dichtwirkung erzielt wird.

Erfindungsgemäß kann das Dichtelement auch durch Dichtschaum in der Wandausnehmung des Hauptrohres fixiert sein. Der Dichtschaum wird vorzugsweise nach der Montage in den verbleibenden Zwischenraum zwischen der Stirnseite der Wandausnehmung und dem Dichtelement oder dem Anschlussstutzen eingebracht.

Erfindungsgemäß kann am inneren Umfang des Anschlussstutzens zumindest ein Verbindungsbolzen vorgesehen sein, der den Anschlussstutzen mit dem Dichtelement und dem Hauptrohr verbindet und somit das Dichtelement in seiner Lage fixiert.

In einer weiteren Ausführungsform der Erfindung umfasst der Anschlussstutzen eine aufgeschraubte Spannmutter und eine Klemmscheibe, welche mit dem ins Innere des Hauptrohres ragenden Dichtelement in Kontakt steht, sodass beim Betätigen der Spannmutter die Klemmscheibe das Dichtelement gegen einen Anschlag des Anschlussstutzens presst. Das Dichtelement ist durch die Klemmscheibe auf der einen Seite und den Anschlag auf der anderen Seite gekammert, und wird durch Betätigung der Spannmutter gegen die Stirnfläche der Wandausnehmung des Hauptrohrs gepresst.

In einer weiteren Ausführungsform der Erfindung ist eine konische Klemme vorgesehen, welche durch einen auf den Anschlussstutzen aufschraubbaren Konusring verschiebbar ist und das an der Stirnfläche der Wandausnehmung angeordnete Dichtelement an seiner konusförmigen Außenfläche gegen einen, am Anschlussstutzen vorgesehenen Anschlag und gegen die Stirnfläche der Wandausnehmung presst. Bei dieser Ausführungsform kann das Nebenrohr auch zur Gänze von außen montiert werden.

In einer weiteren Ausführungsform der Erfindung ist in der Wandausnehmung eine innere Dichtungsklemme mit einem inneren Anschlag und eine äußere Dichtungsklemme mit einem äußeren Anschlag vorgesehen, wobei das an der Stirnseite der Wandausnehmung angeordnete Dichtelement zwischen den Anschlägen gekammert ist, und wobei der Anschlussstutzen über einen Verbindungsring mit der inneren Dichtungsklemme in Verbindung steht. Beim Aufschieben der beiden Dichtungsklemmen in die Wandausnehmung bzw. auf den Anschlussstutzen wird das dazwischen gekammerte Dichtelement zusammen- und gegen die Stirnseite der Wandausnehmung gepresst, sodass die gewünschte Abdichtung erreicht wird. Weitere erfindungsgemäße Merkmale ergeben sich aus den Patentansprüchen, der Figurenbeschreibung und den Zeichnungen.

Die Erfindung wird im Folgenden an Hand nicht ausschließlicher Ausführungsbeispiele näher erläutert. Sämtliche Figuren zeigen einen Querschnitt durch ein Hauptrohr 1, an das ein Nebenrohr 2 durch eine der erfindungsgemäßen Ausführungsformen angeschlossen ist, wobei der Querschnitt entlang der Symmetrieachse des Nebenrohres ausgeführt ist.

Fig. 1 zeigt eine aus dem Stand der Technik bekannte Anschlussvorrichtung zum Anbringen eines Nebenrohrs 2 an ein Hauptrohr 1, wobei das Nebenrohr 2 im Inneren des Hauptrohrs durch Aufwalzen einer Hülse abgedichtet wird.

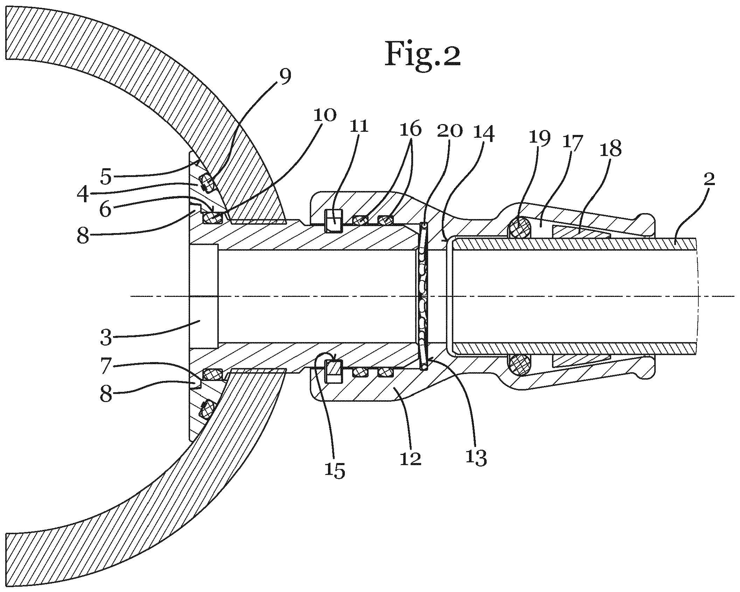

Fig. 2 zeigt eine Ausführungsform einer erfindungsgemäßen Anschlussvorrichtung. Die Anschlussvorrichtung umfasst einen zylinderförmigen Anschlussstutzen 3, der in eine Wandausnehmung eines Hauptrohres 1 über eine schematisch dargestellte Gewindeverbindung eingeschraubt ist. In einer alternativen, nicht dargestellten Ausführungsform ist im Hauptrohr 1 zur Reduzierung der Rohrbelastung kein Gewinde vorgesehen, sondern der Anschlussstutzen 3 ist auf der Außenseite über eine Gegenmutter fixiert. Zur Abdichtung des Anschlussstutzens 3 ist ein am Hauptrohr 1 anliegendes, ringförmiges Dichtelement 4 vorgesehen, dessen Außendurchmesser größer ist als der Durchmesser der Wandausnehmung. Das Dichtelement 4 weist eine erste Dichtfläche 5 auf, die an die Form der Innenwand des Hauptrohres 1 angepasst ist. In dieser ersten Dichtfläche 5 ist in einer Nut ein erster Dichtungsring 9 angeordnet. Weiters umfasst das Dichtelement 4 eine zweite ringförmige Dichtfläche 6, die in Kontakt mit einem äußeren Umfang des Anschlussstutzens 3 steht. In der zweiten Dichtfläche 6 ist ebenfalls in einer Nut ein Dichtungsring 10 angeordnet. In Fig. 2 wird die Nut für Dichtungsring 10 fälschlicherweise im Anschlussstutzen 3 dargestellt. Die erste

Dichtungsfläche 5 und die zweite Dichtungsfläche 6 sind entsprechend den beispielhaft dargestellten Rohrumfangsverhältnissen in einem Winkel von etwa 80° zueinander angeordnet.

Das Dichtelement 4 umfasst an seinem inneren Umfang einen ringförmigen Vorsprung 7, der mit einer ebenfalls ringförmigen Schulter 8 am äußeren Umfang des Anschlussstutzens 3 formschlüssig zusammenwirkt.

Dadurch wird erreicht, dass beim Einschrauben des Anschlussstutzens 3 in die Wandausnehmung des Hauptrohres 1 das Dichtelement 4 über die Schulter 8 und den Vorsprung 7 gegen die Innenwand des Hauptrohres 1 gedrückt wird, sodass die gewünschte Pressung des Dichtelements 4 bzw. der beiden Dichtungsringe 9, 10 erreicht wird.

Der Anschlussstutzen 3 ist im Wesentlichen in drei Bereiche unterteilt, nämlich zunächst einen ersten Bereich, der im montierten Zustand im Inneren des Hauptrohres 1 liegt und die radial vorstehende, umlaufende Schulter 8 zur formschlüssigen Verbindung mit dem Dichtelement 5 aufweist. Daran angrenzend ist ein zweiter Bereich vorgesehen, der ein Außengewinde zum Einschrauben des Anschlussstutzens 3 in die Wandausnehmung des Hauptrohres 1 trägt. Schließlich ist am anderen Ende des Anschlussstutzens 3 ein dritter Bereich vorgesehen, der zum Anschluss des Nebenrohres 2 dient. Zu diesem Zweck umfasst die Anschlussvorrichtung ein im Wesentlichen zylindrisches Fittinggehäuse 12, welches auf den dritten Bereich des Anschlussstutzens 3 gesteckt werden kann.

Das Fittinggehäuse 12 weist eine erste Öffnung zur Aufnahme des Anschlussstutzens 3 auf, wobei Steckverbindungsmittel vorgesehen sind, um eine einfache Steckverbindung zu ermöglichen. Die Steckverbindungsmittel sind im vorliegenden Ausführungsbeispiel als Sprengring 11 ausgeführt, der in einer umlaufenden Nut 15 am äußeren Umfang des Anschlussstutzens 3 angeordnet ist, und zum Eingriff in eine umlaufende Nut am inneren Umfang des Fittinggehäuses 12 ausgeführt ist. Außerdem sind zwischen dem inneren Umfang des Fittinggehäuses 12 und dem äußeren Umfang des Anschlussstutzens 3 zwei Dichtungsringe 16 angeordnet.

Das Fittinggehäuse 12 weist eine zweite Öffnung zur Aufnahme des Nebenrohres 2 auf. Im Bereich der zweiten Öffnung ist eine umlaufende Dichtkammer 17 vorgesehen, welche eine Auszugsicherung für das Nebenrohr 2 umfasst. Die Auszugsicherung ist im vorliegenden Ausführungsbeispiel in Form einer lateral verschiebbaren Klemme 18 mit konischer Außenfläche ausgeführt.

Die Klemme wirkt an ihrer Außenfläche mit einer entsprechend konisch geformten Innenfläche der Dichtkammer 17 zusammen, sodass beim Zurückziehen des Nebenrohres die Zugsicherung aktiviert wird und einer weiteren Zugbewegung des Nebenrohres durch Verklemmung der Klemme 18 entgegenwirkt. Weiters ist im Inneren der Dichtkammer 17 ein Dichtungsring 19 vorgesehen.

Am inneren Umfang des Fittinggehäuses 12 ist eine erste umlaufende Schulter 13 und eine zweite umlaufende Schulter 14 vorgesehen, die als Anschlag für das Einführen des Anschlussstutzens und des Nebenrohres 2 dienen. Dadurch wird sichergestellt, dass diese Elemente nicht zu tief in das Fittinggehäuse eingeführt werden. Weiters ist im Inneren des Fittinggehäuses 12 eine Montageanzeige 20 vorgesehen, welche das Einführen des Anschlussstutzens 3 optisch anzeigt.

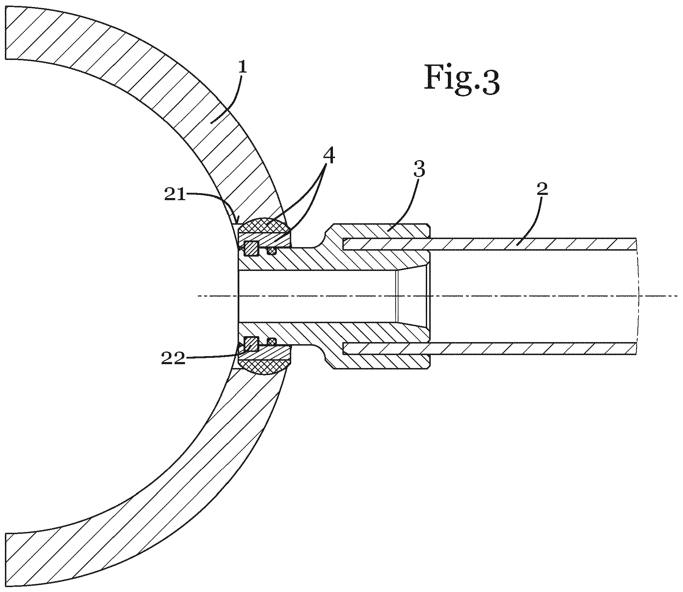

Fig. 3 zeigt eine weitere Ausführungsform einer nicht erfindungsgemäßen Anschlussvorrichtung. In dieser Ausführungsform ist das Dichtelement 4 als Tonnenlagerdichtung ausgeführt, welche an ihrem äußeren, gewölbten Umfang an der Stirnfläche 21 der Wandausnehmung des Hauptrohres 1 anliegt. An ihrem inneren Umfang steht das Dichtelement 4 über einen Verbindungsring 22 mit dem Anschlussstutzen 3 formschlüssig in Eingriff. Das Nebenrohr 2 ist in eine stirnseitige Ringnut des Anschlussstutzens 3 eingesteckt.

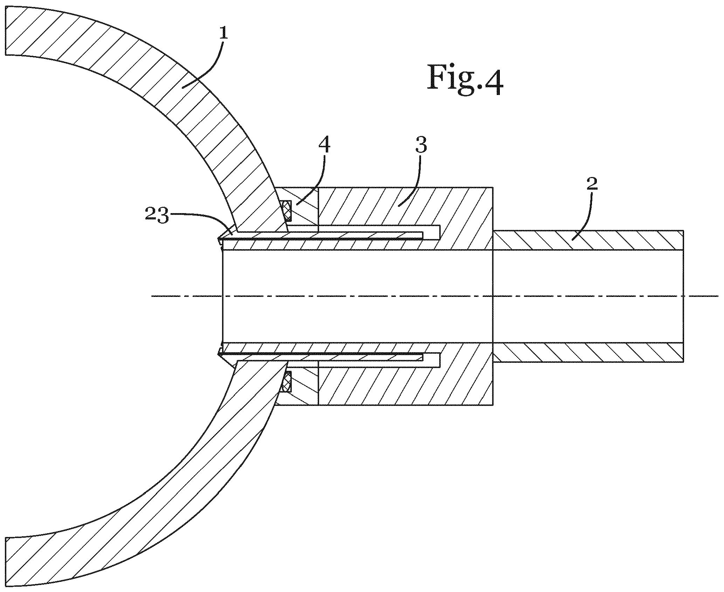

Fig. 4 zeigt eine weitere Ausführungsform einer nicht erfindungsgemäßen Anschlussvorrichtung. In dieser Ausführungsform erfolgt die Abdichtung durch ein Dichtelement 4 das an der Außenseite des Hauptrohres 1 angeordnet ist. Das Dichtelement 4 ist mit dem Anschlussstutzen 3 verschraubt. Um den Anschlussstutzen 3 in der Wandausnehmung zu fixieren, ist ein ringförmiger Steckhaken 23 vorgesehen, welcher die Anordnung fixiert und die Pressung des Dichtelements unterstützt. Das Nebenrohr 2 ist in den Anschlussstutzen eingesteckt.

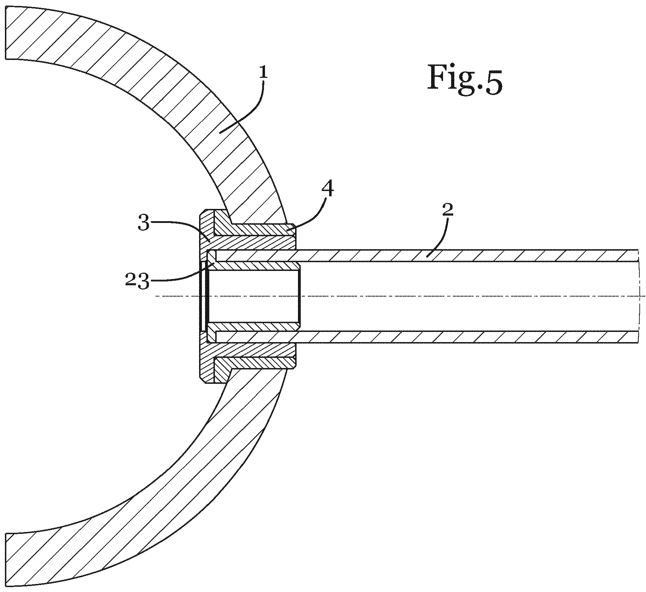

Fig. 5 zeigt eine weitere Ausführungsform einer nicht erfindungsgemäßen Anschlussvorrichtung. In dieser Ausführungsform erfolgt die Abdichtung, indem das Dichtelement 4 als ringförmiges Schweißelement ausgeführt ist. Das ringförmige Schweißelement verfügt über eine Schulter und ist in den als Schweißfitting ausgeführten Anschlussstutzen eingesteckt.

Bei der Montage werden die Elemente ineinander verschweißt, wobei zur Stabilisierung des Nebenrohres 2 im Anschlussstutzen 3 eine separate Stützbuchse 23 vorgesehen ist.

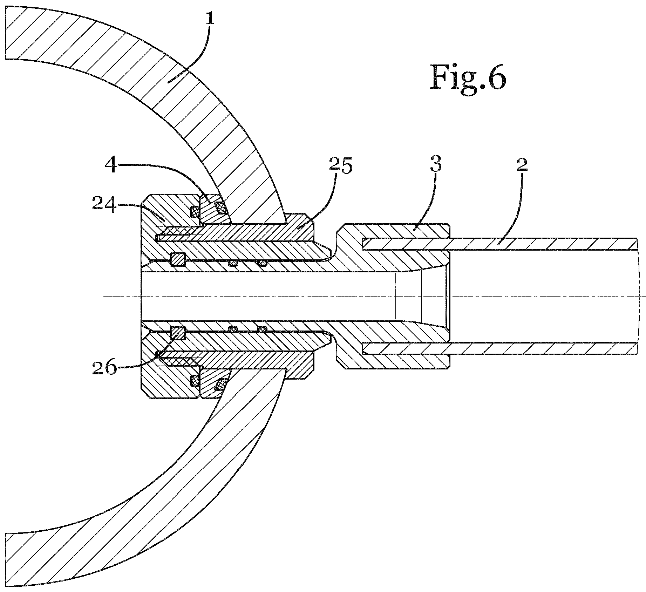

Fig. 6 zeigt eine weitere Ausführungsform einer nicht erfindungsgemäßen Anschlussvorrichtung. In dieser Ausführungsform erfolgt die Abdichtung über ein innenliegendes, ringförmiges Dichtelement 4, das durch Anziehen einer auf einen eingeschobenen Anschlag 25 aufgeschraubten Schraubklemme 24 zusammen und gegen die Innenfläche des Hauptrohres 1 gepresst wird. Der teilweise mit einem Gewinde versehene ringförmige Anschlag 25 gibt dem Dichtungselement 4 stabilen Halt und erlaubt das zentrierte Einführen des Anschlussstutzens 3. Die Schraubklemme 24 steht mit dem Anschlussstutzen 3 über einen Verbindungsring 26 in formschlüssiger Verbindung. Der Anschlag 24 muss von außen in die Wandausnehmung eingesetzt werden.

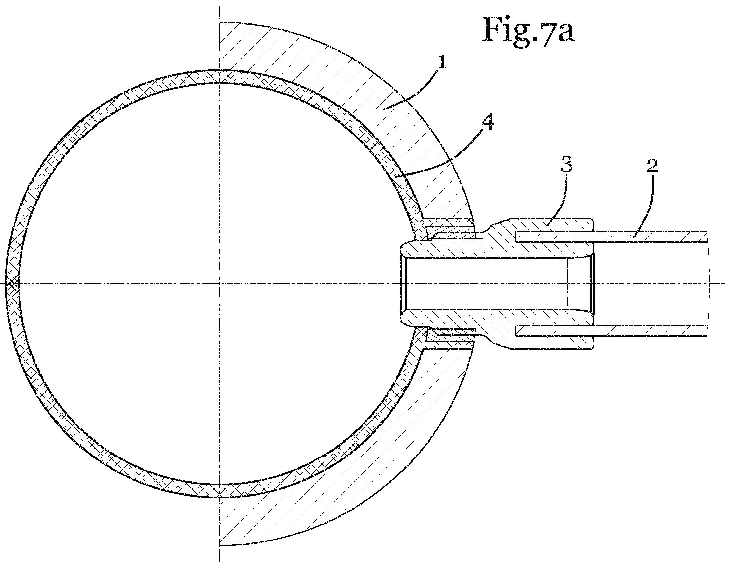

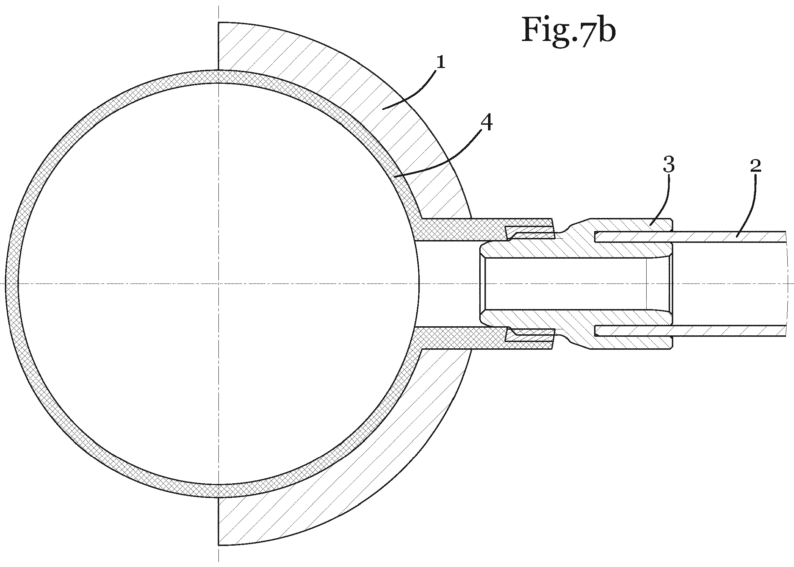

Fig. 7a zeigt eine weitere Ausführungsform einer nicht erfindungsgemäßen Anschlussvorrichtung. In dieser Ausführungsform ist das Dichtelement 4 als ein, den inneren Umfang des Rohres in einem Teilabschnitt bedeckender Dichtmantel ausgeführt. Die Verbindung des Dichtmantels zum Anschlussstutzen 3 erfolgt über ein Einlegeteil. Fig. 7b zeigt eine weitere Variante dieser Ausführungsform, bei der sich das Dichtelement 4 durch die Ausnehmung des Hauptrohres 1 in radialer Richtung nach außen erstreckt und erst dort mit dem Anschlussstutzen 3 verbunden ist.

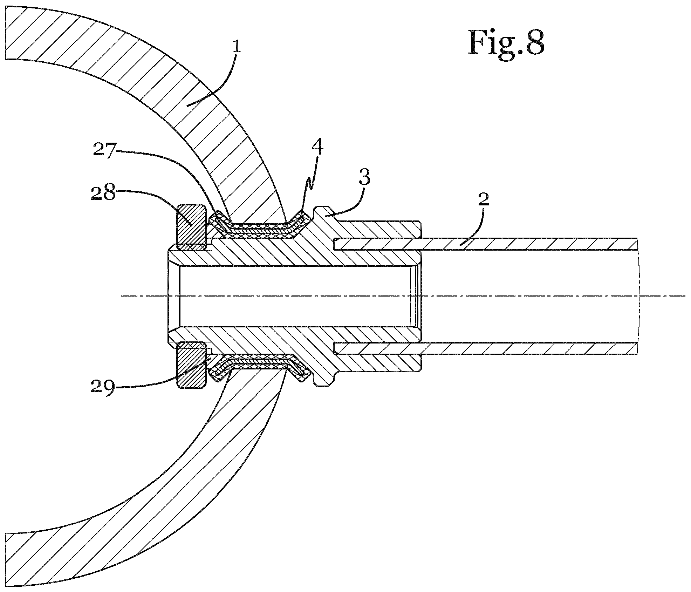

Fig. 8 zeigt eine weitere Ausführungsform einer nicht erfindungsgemäßen Anschlussvorrichtung. In dieser Ausführungsform umfasst das Dichtelement 4 eine eingelegte Schubsicherung in Form eines Blechteils 27. Dieses wirkt einer Stauchung des Dichtelements 4 entgegen, sodass sich das Dichtelement 4 nicht in seiner Längsausdehnung reduzieren lässt. Der Anschlussstutzen 3 umfasst eine aufgeschraubte Spannmutter 28 und eine keilförmige Klemmscheibe 29. Das Dichtelement 4 ist im Bereich der Stirnfläche der Wandausnehmung angeordnet und ragt ins Innere des Hauptrohres. Die Klemmscheibe 29 steht mit dem Dichtelement 4 in winkeligem Kontakt, sodass beim Betätigen der Spannmutter 28 die Klemmscheibe 29 das Dichtelement 4 nach außen presst.

Aufgrund der eingelegten Schubsicherung 27 lässt sich das Dichtelement 4 nicht verkürzen, sondern verbiegt sich nach oben, sodass die gewünschte Dichtwirkung erreicht wird. Auf der anderen Seite der Wandausnehmung ist am Anschlussstutzen 3 ein Anschlag vorgesehen, der einem Ausweichen des Dichtelements 4 entgegenwirkt.

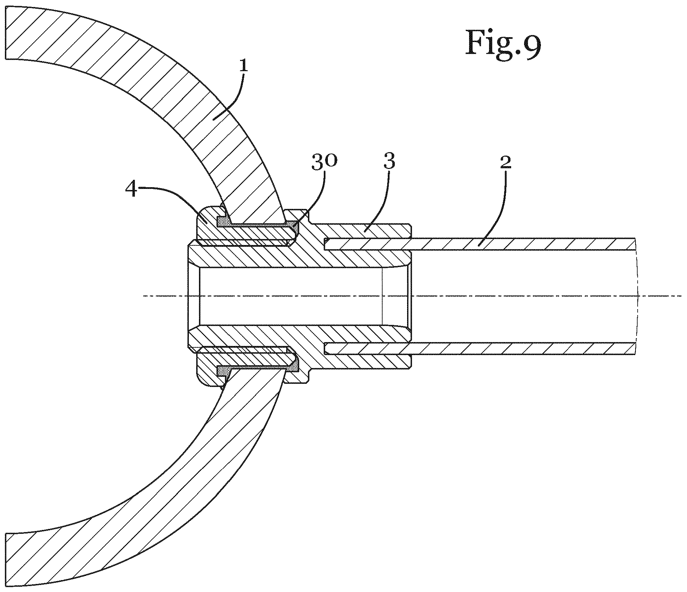

Fig. 9 zeigt eine weitere Ausführungsform einer nicht erfindungsgemäßen Anschlussvorrichtung. In dieser Ausführungsform ist das Dichtelement 4 als Dichtungsklemme ausgeführt, die durch Dichtschaum 30 in ihrer Position in der Wandausnehmung des Hauptrohres 1 fixiert wird.

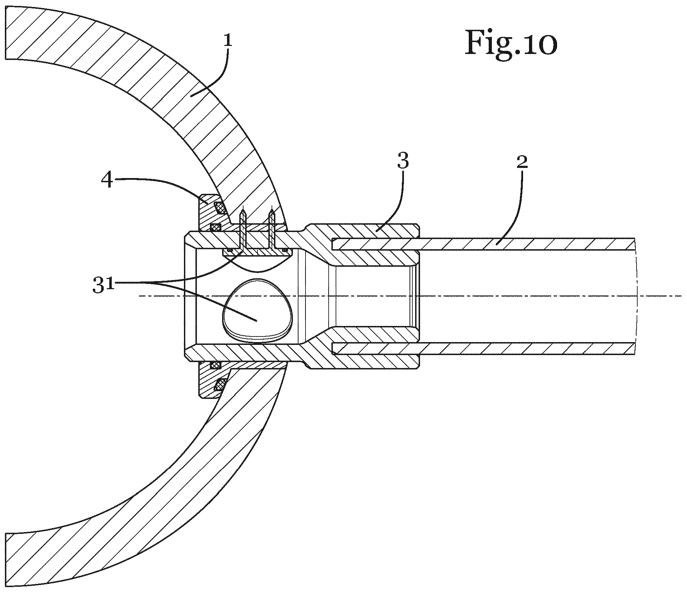

Fig. 10 zeigt eine weitere Ausführungsform einer nicht erfindungsgemäßen Anschlussvorrichtung. In dieser Ausführungsform liegt das Dichtelement 4 sowohl an der Innenfläche des Hauptrohres 1, als auch an der Stirnfläche der Wandausnehmung an. Um das Dichtelement 4 mit dem Anschlussstutzen 3 und dem Hauptrohr 1 zu verbinden, sind Verbindungsbolzen 31 vorgesehen, die aus dem Inneren des Anschlussstutzens 3 in das Hauptrohr 1 getrieben werden.

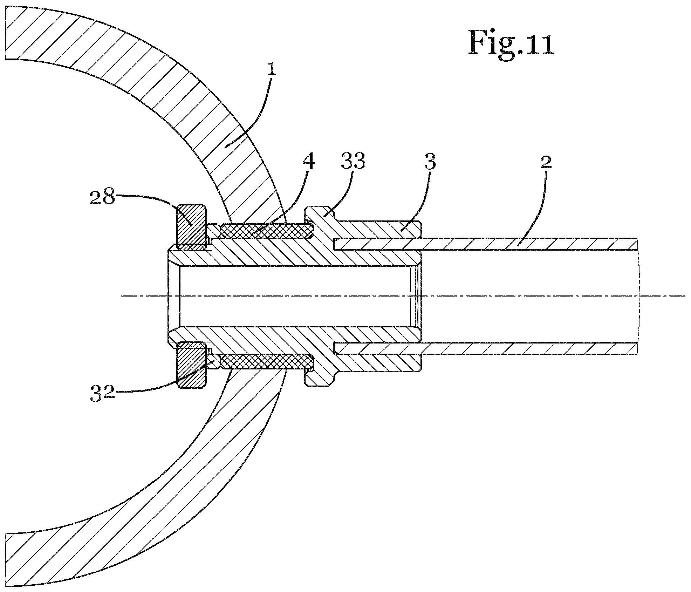

Fig. 11 zeigt eine weitere Ausführungsform einer nicht erfindungsgemäßen Anschlussvorrichtung. In dieser Ausführungsform erfolgt die Abdichtung zum Hauptrohr 1 durch ein rohrförmiges Dichtelement 4, welches durch eine Klemmscheibe 32 und einen Anschlag 33 des Anschlussstutzens 3 gekammert wird. Am Anschlussstutzen 3 ist eine Spannmutter 28 angeordnet, sodass beim Anziehen der Spannmutter 28 das Dichtelement 4 geklemmt und gegen das Hauptrohr 1 gepresst wird, sodass die gewünschte Dichtungswirkung eintritt.

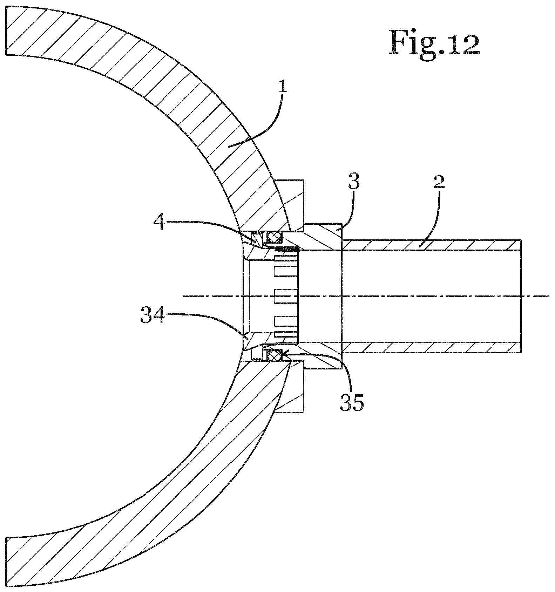

Fig. 12 zeigt eine weitere Ausführungsform einer nicht erfindungsgemäßen Anschlussvorrichtung. In dieser Ausführungsform erfolgt die Abdichtung an der Stirnseite der Wandausnehmung mittels einer Dichtung und einem als konische Klemme ausgeführten Dichtelement 4. Das System wird mittels der konischen Klemme durch Schrauben eines Konusrings 34 auf den Anschlussstutzen 3 fixiert. Dabei wird die Dichtung gegen einen Anschlag 35 des Anschlussstutzens 3 gepresst, sodass die gewünschte Dichtungswirkung eintritt. Diese Ausführungsform kann besonders vorteilhaft auch ausschließlich von außen montiert werden.

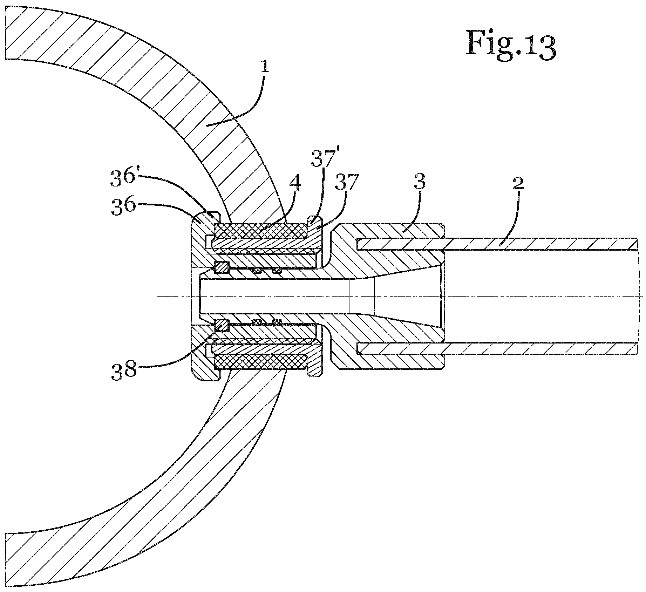

Fig. 13 zeigt eine weitere Ausführungsform einer nicht erfindungsgemäßen Anschlussvorrichtung. In dieser Ausführungsform erfolgt die Abdichtung zum Hauptrohr 1 über ein Dichtelement 4, das durch eine innere Dichtungsklemme 36 mit einem inneren Anschlag 36' und eine äußere Dichtungsklemme 37 mit einem äußeren Anschlag 37' gekammert und gegen die Stirnseite der Wandausnehmung des Hauptrohres 1 gepresst wird. Der Anschlussstutzen 3 steht mit der inneren Dichtungsklemme 36 über einen in zwei gegenüberliegenden Nuten angeordneten Verbindungsring 38 in Verbindung.

### Bezugszeichenliste

- 1: Hauptrohr
- 2: Nebenrohr
- 3: Anschlussstutzen
- 4: Dichtelement
- 5: Erste Dichtfläche
- 6: Zweite Dichtfläche
- 7: Vorsprung
- 8: Schulter
- 9: Erster Dichtungsring
- 10: Zweiter Dichtungsring
- 11: Sprengring
- 12: Fittinggehäuse
- 13: Erste Schulter
- 14: Zweite Schulter
- 15: Nut
- 16: Dichtungsring
- 17: Dichtkammer
- 18: Klemme
- 19: Dichtungsring
- 20: Montageanzeige
- 21: Stirnfläche der Wandausnehmung
- 22: Verbindungsring
- 23: Steckhaken
- 24: Schraubklemme
- 25: Anschlag
- 26: Verbindungsring
- 27: Blechteil
- 28: Spannmutter
- 29: Keilklemmscheibe
- 30: Dichtschaum
- 31: Verbindungsbolzen
- 32: Klemmscheibe
- 33: Anschlag
- 34: Konusklemme
- 35: Anschlag
- 36: Dichtungsklemme
- 36`: Innerer Anschlag
- 37: Äußere Dichtungsklemme
- 37`: Äußerer Anschlag
- 38: Verbindungsring

## Patentansprüche

1. Anschlussvorrichtung zur Verbindung eines Hauptrohres (1) mit einem Nebenrohr (2), umfassend einen in eine Wandausnehmung des Hauptrohres (1) einsetzbaren, vorzugsweise einschraubbaren, im Wesentlichen zylinderförmigen Anschlussstutzen (3) zum Anschluss des Nebenrohres (2), wobei zur Abdichtung des Anschlussstutzens (3) ein am Hauptrohr (1) anliegendes, vorzugsweise ringförmiges Dichtelement (4) vorgesehen ist, welches direkt oder über mechanische Verbindungselemente mit einem äußeren Umfang des Anschlussstutzens (3) in Verbindung steht, und wobei das Dichtelement (4) an seinem inneren Umfang einen Vorsprung (7) umfasst, welcher mit einer Schulter (8) an einem äußeren Umfang des Anschlussstutzens (3) formschlüssig zusammenwirkt,
**dadurch gekennzeichnet, dass**
- der Vorsprung (7) derart mit der Schulter (8) zusammenwirkt, dass das Dichtelement (4) beim Einsetzen oder Verschrauben des Anschlussstutzens (3) in die Wandausnehmung des Hauptrohres (1) gegen die Innenwand des Hauptrohres (1) gepresst wird, und
- das Dichtelement (4) eine erste, vorzugsweise an die Innenfläche des Hauptrohres angepasste Dichtfläche (5) und eine zweite, vorzugsweise ringförmige Dichtfläche (6) aufweist, wobei im montierten Zustand die erste Dichtfläche (5) an der Innenwand des Hauptrohres (1) und die zweite Dichtfläche (6) an einem äußeren Umfang des Anschlussstutzens (3) anliegt, und
- in einer Nut der ersten Dichtfläche (5) ein erster Dichtungsring (9) und in einer Nut der zweiten Dichtfläche (6) ein zweiter Dichtungsring (10) angeordnet ist.

2. Anschlussvorrichtung nach Anspruch 1, **dadurch gekennzeichnet, dass** das Dichtelement (4) an der Innenwand des Hauptrohres (1) im Bereich der Wandausnehmung anliegt.

3. Anschlussvorrichtung nach Anspruch 1 oder 2, **dadurch gekennzeichnet, dass** das Dichtelement (4) an der Stirnfläche (21) der Wandausnehmung des Hauptrohres (1) anliegt.

4. Anschlussvorrichtung nach einem der Ansprüche 1 bis 3, **dadurch gekennzeichnet, dass** das Dichtelement (4) ringförmig ausgeführt ist und der Außendurchmesser des Dichtelements (4) größer als der Durchmesser der Wandausnehmung des Hauptrohres (1) ist.

5. Anschlussvorrichtung nach einem der Ansprüche 1 bis 4, **dadurch gekennzeichnet, dass** sich das Dichtelement (4) durch die Wandausnehmung des Hauptrohres (1) radial nach außen erstreckt.

## Claims

1. A connection device for connecting a main pipe (1) to a secondary pipe (2), comprising a substantially cylindrical connection sleeve (3) which is insertable, preferably screwable, into a wall recess of the main pipe (1) for connecting the secondary pipe (2), wherein a preferably annular sealing element (4), which bears against the main pipe (1) and which is connected directly or via mechanical connecting elements to an outer circumference of the connection piece (3), is provided for sealing the connection sleeve (3), and wherein the sealing element (4) comprises on its inner circumference a projection (7) which interacts in a form-fitting manner with a shoulder (8) on an outer circumference of the connection sleeve (3),
**characterised in that**
- the projection (7) cooperates with the shoulder (8) in such a way that the sealing element (4) is pressed against the inner wall of the main pipe (1) when the connection sleeve (3) is inserted or screwed into the wall recess of the main pipe (1), and
- the sealing element (4) has a first sealing surface (5), preferably adapted to the inner surface of the main pipe, and a second, preferably annular, sealing surface (6), wherein, in the assembled state, the first sealing surface (5) bears against the inner wall of the main pipe (1) and the second sealing surface (6) bears against an outer circumference of the connection piece (3), and
- a first sealing ring (9) is arranged in a groove of the first sealing surface (5) and a second sealing ring (10) is arranged in a groove of the second sealing surface (6).

2. The connection device according to claim 1, **characterised in that** the sealing element (4) bears against the inner wall of the main pipe (1) in the region of the wall recess.

3. The connection device according to claim 1 or 2, **characterised in that** the sealing element (4) bears against the end face (21) of the wall recess of the main pipe (1).

4. The connection device according to one of claims 1 to 3, **characterised in that** the sealing element (4) is annular and the outer diameter of the sealing element (4) is larger than the diameter of the wall recess of the main pipe (1).

5. The connection device according to one of claims 1 to 4, **characterised in that** the sealing element (4) extends radially outwards through the wall recess of the main pipe (1).

## Revendications

1. Dispositif de raccordement pour relier un tube principal (1) à un tube secondaire (2), comprenant une tubulure de raccordement (3) sensiblement cylindrique, insérable, de préférence vissable, dans un évidement de paroi du tube principal (1), pour le raccordement du tube secondaire (2), dans lequel, pour assurer l'étanchéité de la tubulure de raccordement (3), un élément d'étanchéité (4), de préférence annulaire, s'appliquant contre le tube principal (1) est prévu, lequel est relié directement ou par l'intermédiaire d'éléments de liaison mécaniques avec une périphérie extérieure de la tubulure de raccordement (3), et dans lequel l'élément d'étanchéité (4) comprend sur sa périphérie intérieure une saillie (7) qui coopère par engagement positif avec un épaulement (8) sur une périphérie extérieure de la tubulure de raccordement (3),
**caractérisé en ce que**
- la saillie (7) coopère avec l'épaulement (8) de telle sorte que l'élément d'étanchéité (4) est pressé contre la paroi intérieure du tube principal (1) lors de l'insertion ou du vissage de la tubulure de raccordement (3) dans l'évidement de paroi du tube principal (1), et
- l'élément d'étanchéité (4) présente une première surface d'étanchéité (5), de préférence adaptée à la surface intérieure du tube principal, et une deuxième surface d'étanchéité (6), de préférence annulaire, la première surface d'étanchéité (5) s'appliquant dans l'état monté contre la paroi intérieure du tube principal (1) et la deuxième surface d'étanchéité (6) s'appliquant contre une périphérie extérieure de la tubulure de raccordement (3), et
- une première bague d'étanchéité (9) est disposée dans une rainure de la première surface d'étanchéité (5) et une deuxième bague d'étanchéité (10) est disposée dans une rainure de la deuxième surface d'étanchéité (6).

2. Dispositif de raccordement selon la revendication 1, **caractérisé en ce que** l'élément d'étanchéité (4) s'applique contre la paroi intérieure du tube principal (1) dans la zone de l'évidement de paroi.

3. Dispositif de raccordement selon la revendication 1 ou 2, **caractérisé en ce que** l'élément d'étanchéité (4) s'applique contre la surface frontale (21) de l'évidement de paroi du tube principal (1).

4. Dispositif de raccordement selon l'une des revendications 1 à 3, **caractérisé en ce que** l'élément d'étanchéité (4) est de forme annulaire et le diamètre extérieur de l'élément d'étanchéité (4) est supérieur au diamètre de l'évidement de paroi du tube principal (1).

5. Dispositif de raccordement selon l'une des revendications 1 à 4, **caractérisé en ce que** l'élément d'étanchéité (4) s'étend radialement vers l'extérieur à travers l'évidement de paroi du tube principal (1).
